# EUROPEAN PATENT SPECIFICATION

(11) **EP 4 538 899 B1**
(45) Date of publication and mention of the grant of the patent: **24.06.2026**
(21) Application number: 23203182.3
(22) Date of filing: 12.10.2023
(51) Int. Cl.: G06F 13/40, H02J 7/00

(54) **MODULE DETECTION OVER SINGLE-WIRE INTERFACE**
MODULERKENNUNG ÜBER EINZELDRAHTSCHNITTSTELLE
DÉTECTION DE MODULE SUR UNE INTERFACE À FIL UNIQUE

(43) Date of publication of application: 16.04.2025
(73) Proprietor: Infineon Technologies AG, 85579 Neubiberg (DE)
(72) Inventor: WONG, Yow Hing, Singapore 648130 (SG); LIM, Tse Siang Gary, Singapore 142091 (SG)
(74) Representative: Viering, Jentschura & Partner mbB Patent- und Rechtsanwälte

(56) References cited:
- US-A1- 2015 109 727
- US-A1- 2015 312 025
- US-A1- 2022 390 998

## Description

### Technical Field

Various aspects of this disclosure generally relate to single-wire interface connections between a primary device and a secondary device, in which the single-wire interface (SWI) both permits the primary device to charge the secondary device and allows for data exchange between the primary device and the secondary device.

### Background

In certain applications, it may be preferable to utilize an SWI to connect a primary device and a secondary device. SWIs may provide a simple and inexpensive connection between devices, particularly when compared with more complicated, multi-wire bus connections. Despite the simplicity of a single wire, single-wire connections may permit each of power delivery between devices (e.g. a primary device charging a secondary device) and data transfer between devices. For example, an SWI may permit a primary device to connect a secondary device to a supply voltage for performance of one or more operations by a module or component of the secondary device. Often these one or more operations culminate with the secondary device sending data to the primary device, during which time the primary device disconnects the connection to the supply voltage, so that a voltage across the SWI may be selectively brought high or low for the data transfer. With respect to data transfer, the SWI may permit, for example, bidirectional, half-duplex serial communication between the primary device and the secondary device.

A primary device may be configured to be connected to a variety of secondary devices, and even within a particular model or type of secondary device, various configurations may be present. Thus, it may be necessary for the primary device to perform one or more detection operations with respect to the secondary device, such as upon connection over the SWI. Specifically, the primary device may be required to determine whether a secondary device to which it is newly connected includes one or more modules or features. Such a determination should ideally be performed rapidly, using only pre-existing components on the primary device and secondary device, and with minimal communication overhead.

US 2015/109727 A1 discloses an electronic device that includes a housing, a connector port embedded in the housing for a peripheral device inserted therein and a switching device. The processor is electrically connected to the connector port and includes a detection pin and a 1-wire pin. The switching device is coupled between the connector port and the processor to selectively connect the connector port to one of the detection pin or the 1-wire pin. When the peripheral device is inserted into the connector port, the processor controls the switching device to connect the connector port to the detection pin to determine whether the connected peripheral device is a 1-wire device. When the processor determines that the connected peripheral device is a 1-wire device, the processor controls the switching device to connect the connector port to the 1-wire pin and the processor executes 1-wire communication with the peripheral device via the 1-wire pin.

US 2022/390998 A1 discloses a controller configured to: control a transmission over a single-wire interface of an instruction corresponding to a high-current operation; and control an electrical behavior of a charging path to provide current at the single-wire interface during a time period corresponding to an execution of the instructed high-current operation.

### Summary

A primary device according to claim 1, a method of module detection according to claim 13, and a non-transitory computer readable medium according to claim 14 are provided. Further embodiments are described in the dependent claims.

### Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts a simplified configuration of a primary device and a secondary device;
FIG. 2 depicts a voltage across the SWI during and after a charging phase;
FIG. 3 depicts a plurality of voltage measurements with respect to the charging phase, a sampling phase, and a steady state phase;
FIG. 4 depicts a charging phase, sampling phase, and steady state phase across the SWI for a secondary device without an SWI module;
FIG. 5 depicts exemplary voltage measurements, as performed by the analog-digital converter (ADC);
FIG. 6 depicts a primary device that includes an SWI for a single-wire connection to a secondary device;
FIG. 7 depicts a first method of detecting an SWI module within the secondary device;
FIG. 8 depicts a second method of detecting an SWI module within the secondary device;
FIG. 9 depicts a third method of detecting the SWI module in the secondary device;
FIG. 10 depicts an optional configuration, in which the processor detects the SWI module based on samples taken over a plurality of sampling phases;
FIG. 11 depicts an exemplary flow chart for procedures described herein;
FIG. 12 depicts a method of SWI module detection over an SWI; and
FIG. 13 depicts a determination of a faulty element (e.g. energy storage device).

### Detailed Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

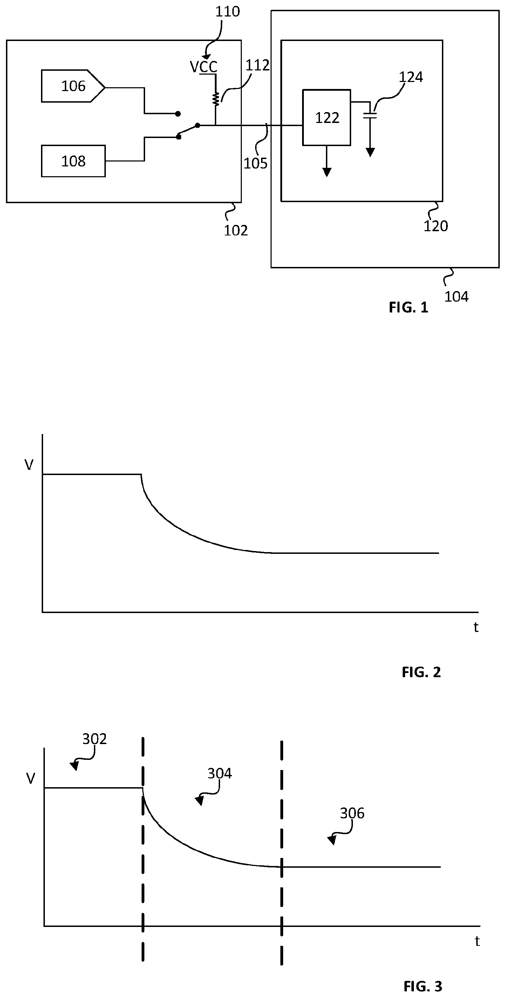

FIG. 1 depicts a simplified configuration of a primary device 102 and a secondary device 104. In this figure, primary device 102 and secondary device 104 are connected via single-wire interface (SWI) 105. Primary device 102 may include an analog-to-digital converter (ADC) 106 (also referred to herein as the voltage detection circuit), which is connected to SWI 105 during a sampling phase. Primary device 102 may also include a general-purpose input output unit (GPIO) 108 (e.g. a GPIO pin, such as on a microcontroller), which is connected to SWI 105 during a charging phase. Primary device 102 may also include a voltage source (e.g. VCC) 110. Primary device 102 may be configured to selectively connect secondary device 104 to either the ADC 106 or GPIO 108, such as through the switch depicted in FIG. 1, which may be implemented using any switching technology, whether transistor-based or otherwise.

As briefly stated above, GPIO 108, as used herein, may describe an input/output port that may be characterized by its supply of an additional supply voltage (e.g. a supply voltage distinct from voltage source 110). In some configurations, the ADC 106 and/or GPIO 108 may optionally be modules (e.g. functions, connections, pins, etc.) within a controlling device, such as a microcontroller. GPIO 108 may be considered a "strong" voltage supply, which can be used to selectively supply a predetermined voltage to the SWI 108. As will be described in greater detail, the voltage supplied by GPIO 108 may be relatively constant, regardless of a current draw across the SWI 105 (assuming a current draw within a tolerable range for the GPIO / corresponding microcontroller), whereas the voltage supplied by the voltage source 110 (e.g. the VCC) may depend on the corresponding current draw, due at least to ohmic resistor 112. These characteristics may be exploited, as will be described herein, to detect the presence or absence of SWI module 122 in secondary device 104. As described in greater detail herein, the voltages of the voltage source 110 and GPIO 108 may be selected based on the given implementation, and the principles and methods described herein may function within a large range of parameters. The values of the open circuit voltages of GPIO 108 and voltage source 110 may be the same. Alternatively, the values of the open circuit voltages of GPIO 108 and the voltage source 110 may be different. The relationship of the open circuit voltage of GPIO 108 and the voltage source 110 may influence the measurement thresholds, e.g., for determination of whether SWI module 122 is present. The skilled person will appreciate how to set the relevant threshold voltages based on the voltages of the GPIO 108 and the voltage source 110, as well as the expected current, the capacitance, and the resistance of the ohmic resistor as described herein.

In some implementations, the voltage source 110 is used to power SWI module 122 and may be distinct from a one or more other supply voltages that may be used to power device 120 itself, such as via one or more additional pins, which include a push-pull strong/weak voltage source as otherwise described herein.

SWI 105 may also be configured to selectively operate as a communication link between the primary and secondary device (102, 104). For purposes of simplicity, the necessary switching network for the selective connection to the voltage source 110 is not depicted in FIG. 1. The connection to the voltage source 110 may be configured with an ohmic resistor 112. When SWI module 122 is connected to the voltage source 110 via the SWI 105, a current may flow. Such flowing current will result in a voltage drop over this ohmic resistor 112, and therefore this ohmic resistor 112 may reduce the voltage level to be provided to secondary device 104 via SWI 105. In some implementations, the ohmic resistor facilitates the implementation of an open drain architecture in secondary device 104.

Secondary device 104 may be any kind of device capable of communication using an SWI, such as 105. Nonlimiting examples of such secondary devices 104 include mobile phones, printers, and/or water dispensers or water filtration systems. Secondary device 104 may be configured with any of a variety of components 120. Component 120 may be any component that fulfills a particular purpose. Although any kind of component may be utilized according to this disclosure as component 120, examples of such components include a battery, a water filter, a cartridge, or the like. Because component 120 may commonly be a battery, and for the sake of simplicity, component 120 may be described in much of the remainder of this disclosure as a battery. This reference to a battery, however, is made for simplicity. The skilled person will appreciate that the teachings with respect to SWI module detection described herein apply to a wide variety of SWI module types.

In certain configurations, it may be desirable to ensure that component 120 satisfies a degree of security or authenticity. That is, it may be desirable to ensure that component 120 is an original component or is otherwise approved or certified by the manufacturer. To this end, and returning to the example in which component 120 is a battery, it may be desirable to ensure that the battery is an original or authentic battery. To this end, various components 120 may be configured with SWI module 122, which may be configured, for example, to perform an authenticating or certifying function, with respect to component 120, over SWI 105. Although SWI module 122 is described herein as performing an authenticating or certifying function, the purpose of the SWI module may be different.

Of greater importance is the determination, as described herein, of whether component 120 is equipped with an SWI module 122, rather than the specific purpose or function of SWI module 122 itself.

SWI module 122 may utilize any of various strategies to inform primary device 102 that component 120 within secondary device 104 is authentic. For example, SWI module 122 may utilize one or more cryptographic processes to provide a secret code to primary device 102, wherein the secret code evidences to primary device 102 into that component 120 within secondary device 104 is authentic.

SWI module 122 may not be universally present in all components 120 or secondary devices 104, and therefore it may be necessary or advantageous for the primary device to detect whether SWI module 122 is present within secondary device 104. As stated above, this detection is ideally performed rapidly, using only pre-existing components on primary device 102 and secondary device 104, and with minimal communication overhead

SWI module 122 may be electrically conductively connected to an element 124, which may be generally understood as an energy storage device and may, for example, be configured as a capacitor. Element 124 may be configured for any of receiving and storing a charge from SWI 105 (e.g. from GPIO 108), for powering SWI module 122, or for smoothing a change in voltage across the SWI. The charge itself may be discharged or consumed by SWI module 122.

Upon connection of primary device 102 to secondary device 104, it may be necessary for primary device 102 to determine whether SWI module 122 for component 120 is present within secondary device 104. On a practical level, the presence of SWI module 122 may require primary device 102 to engage in various communication steps that primary device 102 would not otherwise engage in if secondary device 104 were to lack SWI module 122. Thus, primary device 102 may seek to determine upon connection to secondary device 104 whether secondary device 104 includes SWI module 122.

Because SWI 105 permits at least half-duplex communication between primary device 102 and secondary device 104, it would be theoretically possible for primary device 102 and secondary device 104 to engage in a communication protocol in which primary device 102 sends a request to secondary device 104 to state whether SWI module 122 is present, and the secondary device relies accordingly. Existing devices, however, may not be configured for such a communication protocol, and enabling such communications may require software or even hardware updates. In contrast, the procedure for detecting the presence of SWI module 122 as described herein requires less system memory and can be performed more rapidly than could otherwise be performed with a more complex communications protocol. Relatedly, the procedure as described herein reduces or eliminates the need for updates to the software and/or hardware, thereby reducing the total product costs. Thus, it may be desirable for primary device 102 to detect the presence of SWI module 122 without an explicit communication protocol, but instead with the detection procedure as described herein.

Primary device 102 may more simply detect the presence of SWI module 122 within secondary device 104 using one or more voltage measurements over SWI 105. Upon connection of primary device 102 and secondary device 104 over the SWI, various pre-established protocols (e.g. software detection) may optionally be performed (e.g. one or more start up or boot up activities). Thereafter, primary device 102 selectively connects the SWI module 122 (if present) to the GPIO 108 via SWI 105 during what will be described herein as the charging phase, during which SWI module 122 will be supplied with power from GPIO 108 and element 124 will be charged. FIG. 2 depicts a voltage across the SWI during the charging phase and a subsequent sampling phase, which will be described below.

That is, during the charging phase, primary device 102 connects SWI 105 to GPIO 108, which provides a supply voltage (may be equal to or different from the voltage source 110) at SWI 105. If SWI module 122 and component 124 are present, component 124 charges during the charging phase to a voltage that is equal to or approximates the voltage at GPIO 108. Regardless of whether SWI module 122 is present, the voltage on SWI 105 is expected to approximate or equal the voltage of GPIO 108 during the charging phase.

Following the charging phase, primary device 102 engages in a sampling phase. During the sampling phase, primary device 102 disconnects SWI 105 from the GPIO 108 and instead selectively connects SWI 105 to the ADC 106. The ADC 106 may be configured to perform a plurality of measurements of the voltage at SWI 105 during the sampling phase. In this manner, the ADC may be understood as a type of voltage detection circuit or voltage measurement circuit. During the sampling phase, SWI module 122 continues to be connected to voltage source 110 via SWI 105. If present, SWI module 122 will typically begin performing one or more operations requiring a current draw during the sampling phase. Because SWI module 122 causes a current draw across SWI 105 and from the voltage supply at 110 (SWI 105 is no longer connected to GPIO 108 and therefore voltage source 110, taking into account any voltage drop from its ohmic resistor, defines a minimum voltage across SWI 105), the current utilized by SWI module 122 flows across ohmic resistor 112, resulting in a voltage drop compared to the voltage source 110. That is, the voltage provided to SWI 105 by primary device 102 during the sampling phase is expected to be lower than the voltage of voltage source 110 (e.g. VCC).

As seen in FIG. 1, SWI module 122 may be connected to one or more passive elements (elements, capacitors) 124 which may be configured to store a charge received over the SWI during the charging phase. The lowered voltage provided by primary device 102 to secondary device 104 over SWI 105 resulting from the voltage drop over resistor 112 as described above causes at least a partial discharge of element 124 (e.g. the capacitor), which results in a gradual drop of the voltage across SWI 105, the rate of change of the voltage across SWI 105 being largely determined by the amount of current being drawn by SWI module 122, the resistance (e.g., ohms) of ohmic resistor 112, and the ability of element 124 to store energy (e.g. the capacitance of the capacitor). The gradual reduction in voltage owing to the above factors rapidly reaches a steady state in which an equilibrium is reached between the voltage drop resulting from the current draw of SWI module 122 and the discharge of element 124.

FIG. 3 depicts the plurality of voltage measurements at the ADC 106 with respect to the charging phase 302, the sampling phase 304, and the steady state phase 306, when a secondary device 104 having an SWI module 122 is attached to primary device 102 via SWI 105.

In the charging phase 302, secondary device 104 is connected via SWI 105 to primary device 102, and in particular to the voltage source 110 and GPIO 108. In the charging phase 302, SWI module 122 is in an idle state, during which SWI module 122 draws only a small (e.g. *de minimis,* negligible) current, or potentially even no current. The primary charging may occur via GPIO 108 over the SWI, and thus the voltage across the SWI is at, or approximately at, the voltage of the GPIO 108. For example, if the voltage at GPIO 108 were 1.8 V, the voltage across the SWI would also be approximately 1.8 V. As can be seen from 302, the voltage across the SWI may remain relatively constant throughout the charging phase.

In the sampling phase 304, secondary device 104 continues to be connected to primary device 102 through the SWI 105. During the sampling phase 304, the primary device selectively disconnects SWI 105 from GPIO 108 and selectively connects SWI 105 to ADC 106. SWI module 122, if present, draws current from the voltage source 110 (voltage source 110 and GPIO 108 may have the same open circuit voltage, but the GPIO may alternatively have a slightly higher voltage than the VCC, such as when the GPIO subsystem uses a different power supply than the VCC, without otherwise changing the principles and methods disclosed herein), across the SWI, which results in a voltage drop across ohmic resistor 112. As a result, the ADC 106 measures the voltage across the SWI that is less than the voltage source 110. At the same time, element 124 begins to discharge, which results in a gradual transition (e.g. a curve) from the supply voltage to a steady state voltage. The magnitude of difference between the voltage across the SWI and the supply voltage (based on GPIO 108) at any time during the sampling phase depends on the resistance of ohmic resistor 112, the current draw of SWI module 122 (or any other elements or combinations of elements of the secondary device), and the capacitance of element 124.

During this sampling phase, the ADC 106 takes one or more measurements of the voltage across the SWI. These one or more measurements reflect one or more instantaneous voltages at various points along the curve, wherein the voltage across the SWI transitions from the supply voltage at the GPIO 108 to a steady state voltage.

During the subsequent steady state phase 306, a state of equilibrium has been reached, in which the current drawn from secondary device 104 is relatively constant, and at least some of the charge from element 124 has been discharged. As can be seen from FIG. 3, the voltage across the SWI remains constant or relatively constant during the steady state phase 306.

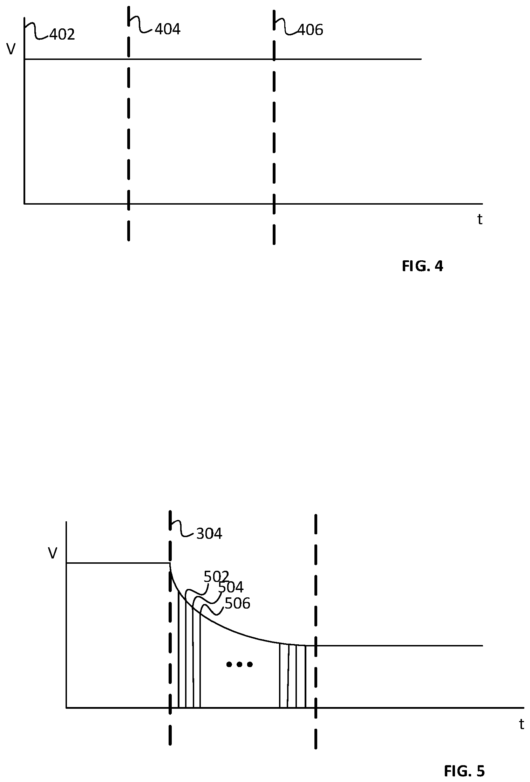

FIG. 4 depicts a charging phase 402, sampling phase 404, and steady state phase 406 for the voltage across the SWI, where secondary device 104 does not include SWI module 122 and thus has little or no current draw during the sampling phase. Similar to FIG. 3, SWI 105 is connected to GPIO 108. Voltages measured across SWI 105 during the charging phase would generally be expected to equal or be substantially similar to the voltage at GPIO 108. Moving to the sampling phase 404, a secondary device 104 lacking SWI module 122, would not be expected to draw current (or would perhaps draw only very minimal current) during the sampling phase 404, such that little or no voltage drop occurs over ohmic resistor 112. As such, the voltage across the SWI during the sampling phase 404 would be expected to equal or closely approximate the supply voltage 110 (note that SWI 105 is not connected to GPIO 108 during the sampling phase 404). Relatedly, because the absence of SWI module 122 suggests an absence of capacitor 124, little to no curve in the transition between the GPIO voltage and the voltage source 110 voltage (assuming a difference; if no difference, the voltage would be unchanged) would be expected to occur. Turning to the steady state phase, 406, and similarly because of the lack of a current draw from secondary device 104, the voltage across the SWI remains unchanged during the steady state phase 406.

In light of the foregoing, and relying on voltage measurements made by the ADC during the sampling phase, a processor of primary device 102 may determine whether SWI module 122 is present in secondary device 104. FIG. 5 depicts exemplary voltage measurements 502, 504, and 506, as performed by the ADC. Although only 3 voltage measurements are labeled, and each of these being toward the beginning of the sampling phase, it can be seen from the image that many more voltage measurements are possible and can be performed at any point during the sampling phase. Similarly, as will be shown, it is also possible to use fewer than 3 samples (e.g. 1 sample or 2 samples).

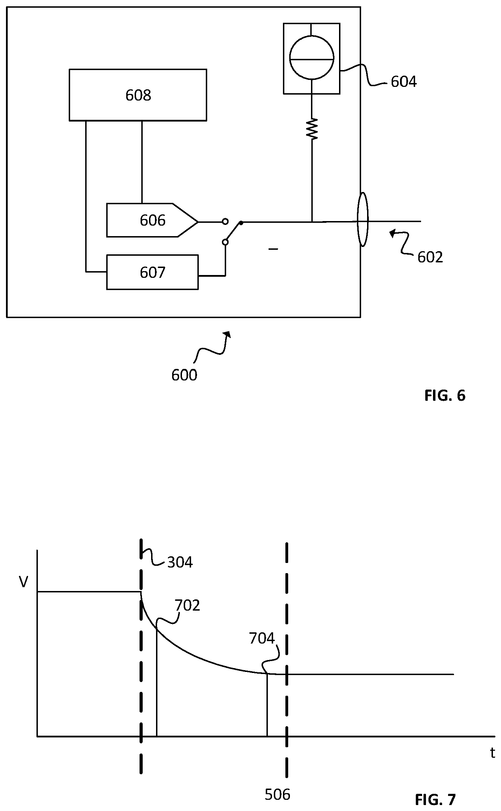

FIG. 6 depicts the primary device (600) of FIG. 1 and includes an SWI 602 for a single-wire connection to a secondary device. The primary device 600 also includes a processor 608, that is configured to selectively connect the SWI 602 to a supply voltage (e.g. the voltage of the GPIO 108) during a charging phase and to a voltage detection circuit (606) during a subsequent sampling phase, during which the voltage detection circuit (606) detects one or more voltages at the SWI (602); and determine whether an SWI module is present in the secondary device based on the detected one or more voltages. The primary device may further include a voltage supply circuit, which may be configured to supply the supply voltage, and includes the voltage detection circuit (606). The primary device may further include a microcontroller or an application processor (such as a mobile application processor in a mobile phone), wherein the voltage supply circuit and the voltage detection circuit are configured as part of the microcontroller or application processor. In some embodiments, the processor 608 may also form part of the microcontroller or application processor. Alternatively, the voltage supply circuit and the voltage detection circuit may also be located in a different component.

In determining whether the SWI module is present in the secondary device based on the detected voltages, and as will be described in greater detail with respect to the first method, the second method, and the third method, the processor 608 may be optionally further configured to generate a signal representing a presence of the SWI module based on a single voltage measurement, or based on a difference between a first voltage measurement of the plurality of voltage measurements and one or more second voltage measurements of the plurality of voltage measurements. This difference may correspond to a difference between the supply voltage and a steady state voltage. Conversely, the processor 608 may be further configured to generate a signal representing an absence of the SWI module based on a single voltage measurement (which is an example that is not part of the present invention), or when the difference between the first voltage measurement of the plurality of voltage measurements and the second voltage measurement of the plurality of voltage measurements is approximately zero.

Alternatively, the processor determining whether SWI module 122 is present in the secondary device may include the processor 608 determining a sum of the plurality of voltage measurements. In this manner, the processor 608 may be configured to generate a signal representing an absence of the SWI module when the sum of the plurality of voltage measurements equals the supply voltage times a quantity of the plurality of voltage measurements. Similarly, the processor may be configured to generate a signal representing a presence of the SWI module when the sum of the plurality of voltage measurements is less than the supply voltage times a quantity of the plurality of voltage measurements.

As mentioned above, the processor may utilize one of at least three different methods to detect SWI module 122 (e.g. to determine the presence or absence of the SWI module). Moreover, two of these methods can be used to detect a faulty capacitor or an absent capacitor coupled to the SWI module 122.

FIG. 7 depicts a first method of detecting an SWI module within the secondary device. In this figure, the processor may detect SWI module 122 based on a difference between two voltage measurements from the ADC. In this manner, the processor evaluates a first voltage measurement 702 taken at or shortly after the beginning of the sampling phase 304, and a second voltage measurement 704, taken following the first voltage measurement 702 (e.g. toward the end of the sampling phase 506). In this manner, the processor determines a difference between the first voltage measurement 702 and the second voltage measurement 704, which will be referred to herein as ΔV. Generally, if ΔV is or approximates the difference between the supply voltage and the steady state voltage (e.g. assuming that the supply voltage and the steady state voltage are not equal, as depicted in at least FIGs. 2,3, and 5, and based on a voltage drop from current drawn from voltage source 110 over ohmic resistor 112), then the presence of SWI module 122 is detected. The processor may, accordingly, optionally send a signal indicating the presence of SWI module 122. Conversely, if ΔV is or approximates 0 (e.g., see FIG. 4), then the absence of SWI module 122 is detected. In that case, the processor may optionally send a signal indicating the absence of SWI module 122.

The processor also detects additional information about the secondary device based on ΔV and the second voltage measurement 704. Specifically, if ΔV is or approximates 0, and the second voltage measurement 704 is equal to the voltage at voltage source 110, then the absence of SWI module 122 is detected. Furthermore, if ΔV is or approximates 0, and the second voltage 704 is or approximates the steady-state voltage (a steady-state voltage less than the voltage source 110), then the presence of SWI module 122 is detected (the lower steady-state voltage would only be reached if SWI module 122 were present and drawing current across the ohmic resistor); however, ΔV being or approximating 0 indicates that the first voltage measurement 702 is also at the steady-state voltage, which may suggest that the element (e.g. the capacitor 124) is defective. In this manner, the processor may send one or more error signals, indicating a defective capacitor, such an error signal may be an audible signal, a visual signal (e.g. a light), a warning on a display, or otherwise. If ΔV equals or approximates the difference between the supply voltage and the steady-state voltage, and if the second voltage measurement 704 is or approximates the steady-state voltage, then SWI module 122 is detected, and the functionality of element 124 is verified. It is expressly noted that, depending how close to the end of the sampling phase the second voltage measurement 704 is taken, the voltage across the SWI may not yet have resolved to the steady-state voltage, and therefore the second voltage measurement 704 may only approximate the steady-state voltage. As such, a tolerance for the second voltage measurement 704 (e.g. a predetermined range above the steady-state voltage) must be considered. Finally, if the second voltage measurement 704 is beneath the steady-state voltage (e.g. beneath an expected or predetermined steady-state voltage), then the processor may determine that SWI module 122 is present but is operating with greater than its expected current, which may indicate a malfunction of SWI module 122.

In a second method for determining the presence or absence of SWI module 122, the processor may detect SWI module 122 based on a single measurement 802 taken during the sampling phase. According to this second method, the processor then compares the single measurement to a predetermined threshold. A measured voltage greater than the predetermined threshold indicates the absence of SWI module 122, while a measured voltage value that is less than the predetermined threshold indicates the presence of SWI module 122. In this case, the predetermined threshold may be the expected steady state voltage, or a value between the GPIO voltage and the expected steady state voltage.

Otherwise stated, and using this the second method, a single voltage measurement may be taken to achieve some degree of confidence about the presence or absence of SWI module 122. It is further noted that this single-measurement method (e.g. the second method) may be performed using a specific measurement timing (e.g. a duration after connecting the SWI with the voltage detection circuit such as an ADC , a duration after beginning the sampling phase, etc.), as the voltage during the sampling phase is closely tied to not only the question of whether SWI module 122 is present, but also to a timing of the measurement relative to the start of the sampling phase.

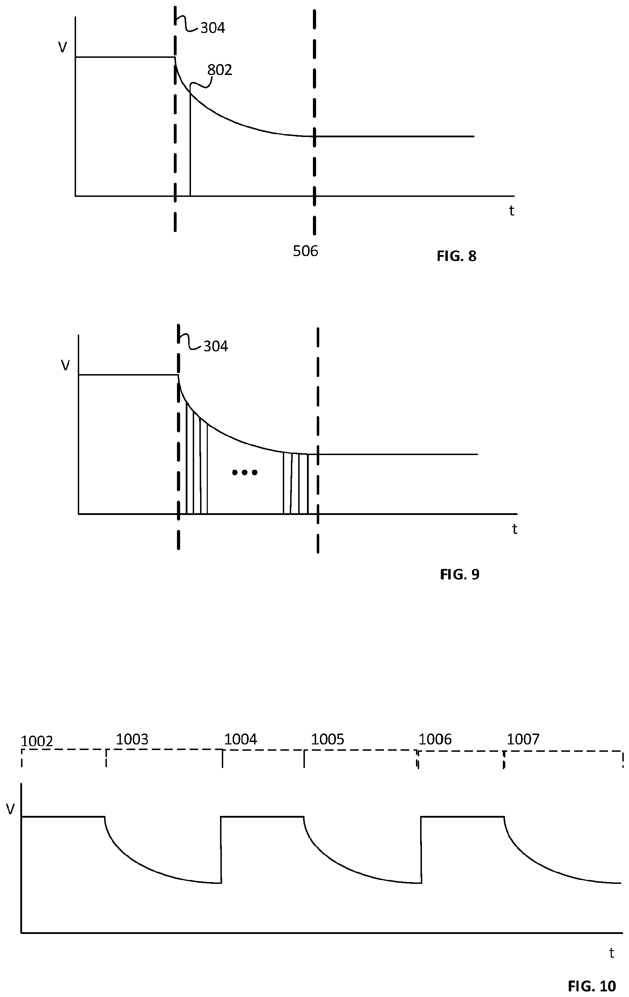

A third method for determining the presence or absence of SWI module 122 is depicted at least by FIG. 9. In this manner, the processor considers multiple, and preferably more than two, voltage measurements during the sampling phase. These multiple measurements may be generally understood as measuring or approximating the area beneath the curve in the sampling phase. The voltages, or alternatively the corresponding steps of the ADC, may be added, and the sum total of these voltages or steps provides information about the presence or absence of SWI module 122.

In an exemplary configuration, which is provided for illustrative purposes only, the supply voltage at the GPIO 108 and the voltage at the voltage source 110 are each 1.8V and the steady-state voltage is 1.66V. Further, and in this exemplary configuration, the ohmic pull-up resistor is configured at 680 ohms, and the capacitor/element is configured to have 2.2µF. If present, SWI module 122 is expected to draw 150µA ± a value, which may be, for example 5%5, which as mentioned above, and taking into account the 680-ohm resistor, yields a steady state voltage of approximately 1.66V. A value greater than the buffer value above the expected current draw may be selected as a threshold for overcurrent of SWI module 122. Using the values in this demonstrative example, 200µA may be hypothetically selected as the value for overcurrent, such that a current draw at or greater than 200µA signifies an overcurrent of SWI module 122 and thereby a malfunction of SWI module 122. The threshold for determining an overcurrent may be selected based on an anticipated maximum current for a given implementation. That is, in this illustrative example, which is provided for demonstrative purposes only SWI module 122 may draw current of 150µA±5%, up to 200µA, beyond which the current draw would be considered an overcurrent. Of course, a current draw in the higher range of normal (in this example, a current draw approaching 200µA) would result in a steady state voltage of less than 1.66V, since the current draw would result in a greater voltage drop over ohmic resistor 112 It is, however, expressly noted that these values are given only for demonstrative purposes.

Further in this exemplary configuration, a 10-bit ADC is used to obtain 16 samples of the voltage across the SWI during the sampling phase (an ADC of greater or lower resolution may be used, and the number of samples may be greater or less than 16). The 10-bit ADC yields 1024 sampling levels, and therefore, assuming that the highest sampling level, 1024, is assigned to the voltage source, 1.8V, and assuming a linear resolution, the steady-state voltage of 1.66V will correspond to step 944. As 1024-944=80, the difference between the maximum sample step (1024) and the actually sampled step (as low as 944) may be determined for each sampled voltage. This difference will be referred to herein as ΔS (e.g. the difference in steps). The ΔS may be added for each of the 16 samples during the sampling phase. As such, the sum of the ΔS values may be up to 1280 (80 _{*} 16 samples = 1280). Should the sum equal 1280, then no change in the voltage from the voltage source is detected, and SWI module 122 is not present. However, at least some tolerance should be considered, and therefore a slightly lower number may be selected (e.g. 1024), such that a sum within a threshold of 1024 to 1280 indicates the absence of SWI module 122.

Continuing in this analysis, an additional threshold may be selected to define a range indicating the presence of SWI module 122 with a functioning element 124, which in this exemplary configuration could be 512 to 1024. In this manner, if the sum of the ΔS among the 16 samples is within the range of 512 to 1024, then SWI module 122 is detected and element 124 is functioning.

Additionally, a lower threshold may be selected to define a range indicating the presence of SWI module 122 with a malfunctioning element 124, which in this exemplary configuration may be <512. Thus, if the sum of ΔS among the 16 samples is <512, then the presence of SWI module 122 is detected; however, element 124 may be considered malfunctioning.

Finally, additional information may be gained by analyzing the absolute step corresponding to the ADC measurement. Specifically, if any step corresponding to a voltage measurement is beneath the step corresponding to the steady-state voltage (or if the voltage measurement is less than the steady-state voltage), then it may be assumed that SWI module 122 is present, but that SWI module 122 is drawing greater than expected current and may be malfunctioning. In this manner, a malfunction would be assumed if any single voltage were detected beneath step 944.

The above considerations related to the second method for this exemplary configuration may be summarized as follows:

| **(Sample step - 944)*16** | **Result** |
|---|---|
| >1024 | SWI module 122 not detected |
| <512 | SWI module 122 detected |
| | Capacitor/element not OK |
| 512-1024 | SWI module 122 detected |
| | Capacitor OK |
| Absolute sample <944 or measured voltage <1.66V | SWI module 122 detected but exceeding expected current |

It is once again emphasized that the exemplary configuration above is intended for demonstrative purposes only. In light of the above disclosure, the skilled person will appreciate the voltage drop expected from an active SWI module 122 over the ohmic resistor, and the remaining values can be adjusted accordingly, also taking into account any differences in supply voltage, number of samples, sampling resolution, etc. Otherwise stated, the principles and methods reflected in this example may be performed with different ohmic resistors (e.g. having difference resistance than that used herein), different VCC values, different types of secondary devices, etc. A change in any one of these features may necessitate a change in some or all of the other features; however, and based on the teachings herein, the skilled person will appreciate how these features are interrelated and how to select a threshold or relevant value based on the values of the remaining features.

The first, second, and third methods have been described above with respect to calculations taken over a single sampling phase. In an alternative configuration, as depicted by FIG. 10, the processor may be configured to determine the presence or absence of SWI module 122 based on samples taken over a plurality of sampling phases. In this figure, a first charging phase 1002 and a first sampling phase 1003 are depicted, followed by a second charging phase 1004 and a second sampling phase 1005, which is followed by a third charging phase 1006 and a third sampling phase 1007. In this manner, the processor may perform any of the above-described determinations with respect to the first, second, or third method, and repeat these determinations for each of a plurality of sampling phases (e.g. 1003, 1005, 1007, etc.). In this figure, three successive phase groupings are depicted for demonstrative purposes; however, any two or more successive sampling phases may be used, and the depiction of three successive sampling phases is not intended to be limiting. In this manner, the results from multiple successive determinations may be averaged or weighted against one another. Such use of multiple successive determinations may reduce the risk of a single false calculation, such as due to a delayed start or completion of the charging phase, a delayed start or completion of the sampling phase, jitter, static, or any other source of interference that may negatively affect the voltage measurements of the ADC.

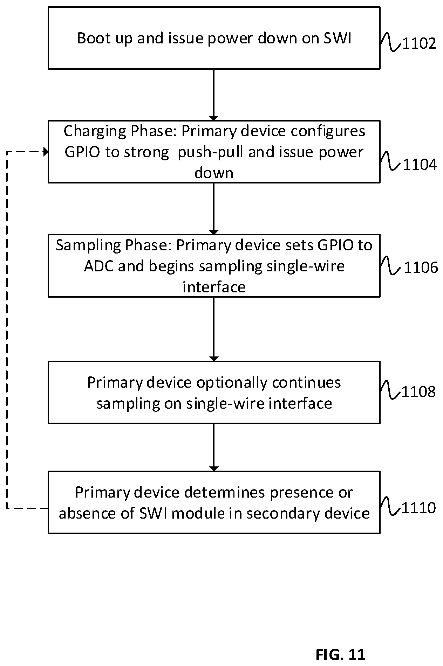

FIG. 11 depicts an optional flow chart for the procedures described herein. In this flowchart, the primary device initiates a boot up of the secondary device 1102. Both the boot up process and the procedure by which a boot up is achieved may vary widely from device to device and are generally outside the scope of the SWI module detection described herein. Following boot up, the primary device may initiate a SWI power down signal follow by a charging phase 1104, in which the SWI is connected to the general purpose input output (GPIO) and it configures the GPIO to a strong push-pull setting. The primary device may subsequently begin the sampling phase thereafter by selectively connecting the SWI with the ADC instead of the GPIO and begin sampling the voltage over the SWI 1106. Depending on the method used, and in particular depending on whether multiple samples are requires, the primary device may continue to sample the voltage over the SWI during the sampling phase 1108. Based on the measurement results, the primary device determines the presence or absence of the SWI module within the secondary device 1110. Optionally, as described in at least FIG. 9, the measurement steps may be repeated, such that the ultimate determination of the presence or absence of the SWI module within the secondary device is performed based on a plurality of sampling phases.

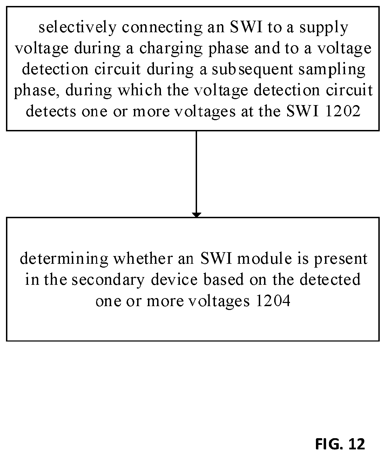

FIG. 12 depicts a method of detection over an SWI. The method includes selectively connecting an SWI to a supply voltage during a charging phase and to a voltage detection circuit during a subsequent sampling phase, during which the voltage detection circuit detects one or more voltages at the SWI 1202; and determining whether an SWI module is present in the secondary device based on the detected one or more voltages 1204.

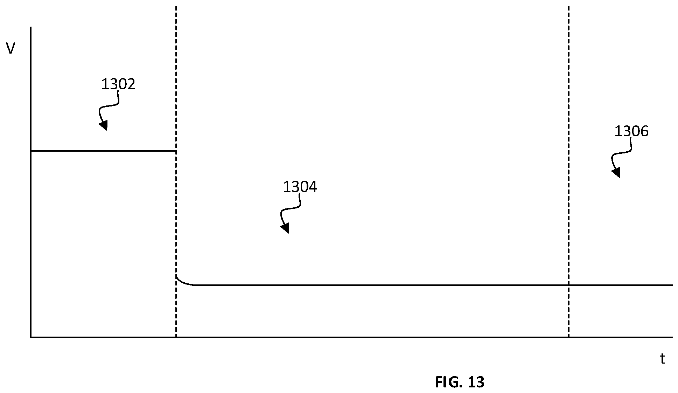

FIG. 13 depicts a detection of a malfunctioning element 124 (e.g. a capacitor), according to an aspect of the disclosure. Should it occur that the element 124 is malfunctioning, it would not be expected to store the energy provided during the charging phase. In this manner, the pattern depicted in FIG. 13 arises. During the charging phase 1302, the voltage along the SWI is equal or very closely approximates the GPIO voltage. Upon entering the sampling phase 1304, however, the SWI is disconnected from the GPIO and quickly arrives at the steady state voltage. A secondary device with a malfunctioning element 124 will generally reach the steady state voltage faster than a secondary device with a functioning capacitor, as the period in which the capacitor discharges will normally elevate the voltage at the SWI greater than the steady state voltage. In the case of a malfunctioning element 124, as depicted in FIG. 13, it can be seen that the steady state voltage is reached almost immediately after disconnecting the SWI from the GPIO. Thus, the sampling phase 1204 is conducted almost entirely at the steady state voltage. The steady state phase 1306 would also be understood to perform at the steady state voltage.

In light of the foregoing, either the first or the third methods may be used to detect a faulty element 124. (The second method involves only a single measurement and would not generally suffice to make this determination). In the first method, the difference between the two voltage measurements would be or approximate 0V (thereby indicating that both measurements during the sampling phase 1304 were made at or close to the steady state voltage). Using the third method, if the sum of the voltages measurements during the sampling phase 1304 approximate the steady state voltage times the number of samples, this may indicate a faulty element 124.

The ADC may be any kind of analog digital converter, including a successive approximation ADC, a Delta-Sigma ADC, a dual slope ADC, a pipelined ADC, or flash ADC.

Should the processor determine the presence or absence of SWI module 122, the processor may be optionally configured to send a signal indicating this determination. That is, the processor may send a signal indicating the detection of SWI module 122, or the absence of SWI module 122. Similarly, should the processor determine a malfunction of SWI module 122 (e.g. based on a measured voltage in the sampling phase beneath the expected steady-state voltage, according to method one or method two), the processor may be optionally configured to send a signal indicating a malfunction of SWI module 122.

Should the measurements indicate that the voltage in the sampling phase rapidly reaches the steady-state voltage without the expected curve from discharge of the element/capacitor, the processor may be further configured to send a signal representing a malfunction of element/capacitor. Alternatively or additionally, such a malfunction of the element/capacitor may detected if a difference between a first voltage measurement of the plurality of voltage measurements and a second voltage measurement of the plurality of voltage measurements is approximately, or equal to, zero.

In the foregoing, SWI module 122 has been generally referred to as a "module" to indicate that the principles and methods disclosed herein may be applied broadly to a variety of different modules performing a variety of different functions. Such modules may include communications modules (baseband modems, transceivers etc.), cryptography modules, security modules, or otherwise. In particular, SWI module 122 may be or include a battery authentication module, which may be connected to a battery for the secondary device, and may be configured to send one or more signals to the primary device to authenticate (e.g. confirm, approve, indicate the veracity of, etc.) the battery.

The timings of the charging phase, sampling phase, and steady-state phase may vary depending on the implementation. As described above, and prior to beginning the SWI module detection steps described herein, one or more boot up procedures may be necessary. The duration of the boot up depends on the given devices and their configurations, and the boot up may be of any duration. In an exemplary configuration, the boot up may be less than 500 ms. The boot up may lead directly into the charging phase, which may be very brief. The charging phase need only be as long as it is required to charge the element/capacitor to the supply voltage. During the boot up phase, substantial communication may ensue between the primary device and the secondary device, which may result in a charging or partial charging of the element/capacitor. Following completion of the boot up phase, a brief charging. May optionally be necessary or desired, during which the SWI is held at the supply voltage, and the capacitor is charged. The subsequent sampling phase may be of a duration necessary for the voltage over the SWI to settle into the steady-state voltage, assuming the presence of the SWI module within the secondary device. In an exemplary configuration, the duration of the sampling phase may be approximately 3 ms. Depending, for example on the difference between the steady-state voltage and the supply voltage, as well as the capacitance of the element/capacitor, the measurement period may be longer or shorter than 3 ms.

In some configurations, the ADS 106 and GPIO 108 may be configured as part of the same microcontroller. Optionally, either or both of ADS 106 or GPIO 108 may be configured externally to primary device 102. In this manner, the primary device may selectively connect SWI 105 to an external ADS 106 and/or to an external strong voltage supply (e.g. analogous to GPIO 108).

In an optional, alternative configuration, either or both of ADC 106 or GPIO 108 can be configured as part of the secondary device 120. In this manner, the secondary device may connect SWI 105 to a strong voltage supply (e.g. analogous to GPIO 108) located in secondary device 104 during the charging phase and/or to an ADC (analogous to ADC 106) during the sampling phase.

Additional aspects of the disclosure will be described by the following examples which do not fall under the scope of the invention as claimed.

In Example 1, a primary device comprises an SWI for a single-wire connection to a secondary device; a voltage supply circuit, configured to connect the SWI to a supply voltage during a charging phase and a subsequent sampling period, wherein the charging phase is for charging an element of the secondary device; a voltage detection circuit, configured to generate a plurality of voltage measurements of a voltage at the SWI during the sampling period; and a processor, configured to determine whether an SWI module is present in the secondary device based on the plurality of voltage measurements.

In Example 2, the primary device of Example 1, wherein the processor is configured to generate a signal representing a detection of the SWI module when the plurality of voltage measurements transition from the supply voltage to a steady-state voltage, lower than the supply voltage, during the sampling period.

In Example 3, the primary device of Example 1 or 2, wherein the processor is further configured to generate a signal representing an absence of the SWI module when the plurality of voltage measurements remain at the supply voltage during the sampling period.

In Example 4, the primary device of any one of Examples 1 to 3, wherein the processor determining whether the SWI module is present in the secondary device based on the plurality of voltage measurements comprises the processor determining a difference between a first voltage measurement of the plurality of voltage measurements and a second voltage measurement of the plurality of voltage measurements.

In Example 5, the primary device of Example 4, wherein the processor is further configured to generate a signal representing a presence of the SWI module when the difference between the first voltage measurement of the plurality of voltage measurements and the second voltage measurement of the plurality of voltage measurements corresponds to a difference between the supply voltage and a steady state voltage, and wherein the processor is further configured to generate a signal representing an absence of the SWI module when the difference between the first voltage measurement of the plurality of voltage measurements and the second voltage measurement of the plurality of voltage measurements is approximately zero.

In Example 6, the primary device of any one of Examples 1 to 5, wherein the processor determining whether the SWI module is present in the secondary device based on the plurality of voltage measurements comprises the processor determining a sum of the plurality of voltage measurements.

In Example 7, the primary device of Example 6, wherein the processor is configured to generate a signal representing an absence of the SWI module when the sum of the plurality of voltage measurements equals the supply voltage times a quantity of the plurality of voltage measurements.

In Example 8, the primary device of Example 6 or 7, wherein the processor is configured to generate a signal representing a presence of the SWI module when the sum of the plurality of voltage measurements is less than the supply voltage times a quantity of the plurality of voltage measurements.

In Example 9, the primary device of any one of Examples 1 to 8, wherein the voltage supply circuit comprises an ohmic resistor, configured to generate a voltage drop corresponding to a difference between the supply voltage and the steady-state voltage when the secondary device with the SWI module is connected to the primary device via the SWI.

In Example 10, the primary device of Example 9, wherein the steady-state voltage corresponds to the supply-voltage reduced by a voltage drop over the ohmic resistor based on a current-draw of the SWI module.

In Example 11, the primary device of any one of Examples 1 to 10, wherein the voltage detection circuit comprises an analog digital converter.

In Example 12, the primary device of Example 11, wherein the analog digital converter is a successive approximation analog digital converter.

In Example 13, the primary device of any one of Examples 10 to 12, wherein the analog digital converter is configured with a resolution to detect a plurality of steps between the supply voltage and the steady-state voltage.

In Example 14, the primary device of any one of Examples 1 to 13, wherein the processor is further configured to send a signal representing a malfunction of the SWI module when a voltage measurement of the plurality of voltage measurements falls beneath a first predetermined threshold, or when a sum of the plurality of voltage measurements falls beneath a second predetermined threshold.

In Example 15, the primary device of Example 14, wherein the first predetermined threshold is the steady state voltage or wherein the second predetermined threshold is the steady state voltage times a number of measurements of the plurality of voltage measurements.

In Example 16, the primary device of any one of Examples 1 to 15, wherein the processor is further configured to send a signal representing a malfunction of the element of the secondary device if a difference between a first voltage measurement of the plurality of voltage measurements and a second voltage measurement of the plurality of voltage measurements is approximately, or equal to, zero.

In Example 17, the primary device of any one of Examples 1 to 16, wherein the element of the secondary device is a capacitor.

In Example 18, the primary device of any one of Examples 1 to 17, wherein the secondary device comprises a battery, and wherein the SWI module is a battery authentication SWI module.

In Example 19, the primary device of any one of Examples 1 to 18, wherein the primary device is configured to perform a plurality of SWI module determinations, wherein each of the plurality of SWI module determinations comprises the voltage supply circuit connecting the SWI to the supply voltage for charging the element of the secondary device during the charging phase; and the voltage detection circuit generating the plurality of voltage measurements of the voltage at the SWI during the sampling period; and wherein the processor is configured to determine whether an SWI module is present in the secondary device based the plurality of SWI module determinations.

In Example 20, a method of detection over an SWI comprising connecting the SWI to a supply voltage during a charging phase and a subsequent sampling period, wherein the charging phase is for charging an element of the secondary device; generating a plurality of voltage measurements of a voltage at the SWI during the sampling period; and determining whether an SWI module is present in the secondary device based on the plurality of voltage measurements.

In Example 21, the method of Example 20, further comprising generating a signal representing a detection of the SWI module when the plurality of voltage measurements transition from the supply voltage to a steady-state voltage, lower than the supply voltage, during the sampling period.

In Example 22, the method of Example 20 or 21, further comprising generating a signal representing an absence of the SWI module when the plurality of voltage measurements remain at the supply voltage during the sampling period.

In Example 23, the method of any one of Examples 20 to 22, wherein determining whether the SWI module is present in the secondary device based on the plurality of voltage measurements comprises determining a difference between a first voltage measurement of the plurality of voltage measurements and a second voltage measurement of the plurality of voltage measurements.

In Example 24, the method of Example 23, further comprising generating a signal representing a presence of the SWI module when the difference between the first voltage measurement of the plurality of voltage measurements and the second voltage measurement of the plurality of voltage measurements corresponds to a difference between the supply voltage and a steady state voltage, and generating a signal representing an absence of the SWI module when the difference between the first voltage measurement of the plurality of voltage measurements and the second voltage measurement of the plurality of voltage measurements is approximately zero.

In Example 25, the method of any one of Examples 20 to 24, wherein determining whether the SWI module is present in the secondary device based on the plurality of voltage measurements comprises determining a sum of the plurality of voltage measurements.

In Example 26, the method of Example 25, further comprising generating a signal representing an absence of the SWI module when the sum of the plurality of voltage measurements equals the supply voltage times a quantity of the plurality of voltage measurements.

In Example 27, the method of Example 25 or 26, further comprising generating a signal representing a presence of the SWI module when the sum of the plurality of voltage measurements is less than the supply voltage times a quantity of the plurality of voltage measurements.

In Example 28, the method of any one of Examples 20 to 27, wherein the steady-state voltage corresponds to the supply-voltage reduced by a voltage drop over an ohmic resistor based on a current-draw of the SWI module.

In Example 29, the method of any one of Examples 20 to 28, further comprising performing the one or more voltage measurements with an analog digital converter.

In Example 30, the method of Example 29, wherein the analog digital converter is a successive approximation analog digital converter.

In Example 31, the method of any one of Examples 28 to 30, wherein the analog digital converter is configured with a resolution to detect a plurality of steps between the supply voltage and the steady-state voltage.

In Example 32, the method of any one of Examples 20 to 31, further comprising sending a signal representing a malfunction of the SWI module when a voltage measurement of the plurality of voltage measurements falls beneath a first predetermined threshold, or when a sum of the plurality of voltage measurements falls beneath a second predetermined threshold.

In Example 33, the method of Example 32, wherein the first predetermined threshold is the steady state voltage or wherein the second predetermined threshold is the steady state voltage times a number of measurements of the plurality of voltage measurements.

In Example 34, the method of any one of Examples 20 to 33, further comprising sending a signal representing a malfunction of the element of the secondary device if a difference between a first voltage measurement of the plurality of voltage measurements and a second voltage measurement of the plurality of voltage measurements is approximately, or equal to, zero.

In Example 35, the method of any one of Examples 20 to 34, wherein the element of the secondary device is a capacitor.

In Example 36, the method of any one of Examples 20 to 35, wherein the secondary device comprises a battery, and wherein the SWI module is a battery authentication SWI module.

In Example 37, the method of any one of Examples 20 to 36, further comprising performing a plurality of SWI module determinations, wherein each of the plurality of SWI module determinations comprises the voltage supply circuit connecting the SWI to the supply voltage for charging the element of the secondary device during the charging phase; and generating the plurality of voltage measurements of the voltage at the SWI during the sampling period; and determining whether an SWI module is present in the secondary device based the plurality of SWI module determinations.

In Example 38, a computer readable medium, comprising instructions which, if executed, cause one or more processors to: connect the SWI to a supply voltage during a charging phase and a subsequent sampling period, wherein the charging phase is for charging an element of the secondary device; generate a plurality of voltage measurements of a voltage at the SWI during the sampling period; and determine whether an SWI module is present in the secondary device based on the plurality of voltage measurements.

In Example 39, the computer readable medium of Example 38, wherein the instructions are further configured to cause the one or more processors to generate a signal representing a detection of the SWI module when the plurality of voltage measurements transition from the supply voltage to a steady-state voltage, lower than the supply voltage, during the sampling period.

In Example 40, the computer readable medium of Example 38 or 39, wherein the instructions are further configured to cause the one or more processors to generate a signal representing an absence of the SWI module when the plurality of voltage measurements remain at the supply voltage during the sampling period.

In Example 41, the computer readable medium of any one of Examples 38 to 40, wherein determining whether the SWI module is present in the secondary device based on the plurality of voltage measurements comprises determining a difference between a first voltage measurement of the plurality of voltage measurements and a second voltage measurement of the plurality of voltage measurements.

In Example 42, the computer readable medium of Example 41, wherein the instructions are further configured to cause the one or more processors to generate a signal representing a presence of the SWI module when the difference between the first voltage measurement of the plurality of voltage measurements and the second voltage measurement of the plurality of voltage measurements corresponds to a difference between the supply voltage and a steady state voltage, and to generate a signal representing an absence of the SWI module when the difference between the first voltage measurement of the plurality of voltage measurements and the second voltage measurement of the plurality of voltage measurements is approximately zero.

In Example 43, the computer readable medium of any one of Examples 38 to 42, wherein determining whether the SWI module is present in the secondary device based on the plurality of voltage measurements comprises determining a sum of the plurality of voltage measurements.

In Example 44, the computer readable medium of Example 43, wherein the instructions are further configured to cause the one or more processors to generate a signal representing an absence of the SWI module when the sum of the plurality of voltage measurements equals the supply voltage times a quantity of the plurality of voltage measurements.

In Example 45, the computer readable medium of Example 43 or 44, wherein the instructions are further configured to generate a signal representing a presence of the SWI module when the sum of the plurality of voltage measurements is less than the supply voltage times a quantity of the plurality of voltage measurements.

In Example 46, the computer readable medium of any one of Examples 38 to 45, wherein the steady-state voltage corresponds to the supply-voltage reduced by a voltage drop over an ohmic resistor based on a current-draw of the SWI module.

In Example 47, the computer readable medium of any one of Examples 38 to 46, wherein the instructions are further configured to perform the one or more voltage measurements with an analog digital converter.

In Example 48, the computer readable medium of any one of Examples 38 to 47, wherein the instructions are further configured to send a signal representing a malfunction of the SWI module when a voltage measurement of the plurality of voltage measurements falls beneath a first predetermined threshold, or when a sum of the plurality of voltage measurements falls beneath a second predetermined threshold.

In Example 49, the computer readable medium of Example 48, wherein the first predetermined threshold is the steady state voltage or wherein the second predetermined threshold is the steady state voltage times a number of measurements of the plurality of voltage measurements.

In Example 50, the computer readable medium of any one of Examples 38 to 49, wherein the instructions are further configured to send a signal representing a malfunction of the element of the secondary device if a difference between a first voltage measurement of the plurality of voltage measurements and a second voltage measurement of the plurality of voltage measurements is approximately, or equal to, zero.

In Example 51, the computer readable medium of any one of Examples 38 to 50, wherein the instructions are further configured to perform a plurality of SWI module determinations, wherein each of the plurality of SWI module determinations comprises the voltage supply circuit connecting the SWI to the supply voltage for charging the element of the secondary device during the charging phase; and generating the plurality of voltage measurements of the voltage at the SWI during the sampling period; and determining whether an SWI module is present in the secondary device based the plurality of SWI module determinations.

In Example 1a, a primary device comprising an SWI, SWI, (602) for a single-wire connection to a secondary device; a processor (608), configured to selectively connect the SWI (602) to a supply voltage during a charging phase and to a voltage detection circuit (606) during a subsequent sampling phase, during which the voltage detection circuit (606) detects one or more voltages at the SWI (602); and determine whether an SWI module is present in the secondary device based on the detected one or more voltages.

In Example 2a, the primary device of Example 1a, further comprising a voltage supply circuit (607), configured to supply the supply voltage, and the voltage detection circuit (606).

In Example 3a, the primary device of Example 2a, further comprising a microcontroller, wherein the voltage supply circuit and the voltage detection circuit are configured as part of the microcontroller.

In Example 4a, the primary device of Example 3a, wherein the voltage supply circuit is a General Purpose Input Output port of the microcontroller.

In Example 5a, the primary device of any one of Examples 1a to 4a, wherein the processor (608) determining whether the SWI module is present in the secondary device comprises the processor being configured to generate a signal representing a detection of the SWI module (122) when a difference between two voltages detected during the sampling phase is outside of a range, and the processor (608) being configured to generate a signal representing an absence of the SWI module (122) when a difference between two voltages detected during the sampling phase is within the range.

In Example 6a, the primary device of any one of Examples 1a to 4a, wherein the processor (608) determining whether the SWI module is present in the secondary device comprises the processor being configured to generate a signal representing a detection of the SWI module (122) when a voltage detected during the sampling phase is within a predetermined range, and being configured to generate a signal representing an absence of the SWI module (122) when the voltage detected during the sampling phase is outside of the predetermined range.

In Example 5a1, the primary device of Example 5a, wherein generating a signal representing a detection of the SWI module when a difference between two voltages detected during the sampling phase is outside of a predetermined range comprises the processor receiving first data representing a first detected voltage and receiving second data representing a second detected voltage; determining a difference between the first detected voltage and the second detected voltage; and determining that this difference is outside the predetermined range.

In Example 5a2, the primary device of Example 5a1, wherein, in a hypothetical example provided for illustrative purposes only, the first detected voltage is 1.73V and the second detected voltage is 1.66V, and the predetermined range is a difference of 50mV to 90mV.

In Example 5a3, the primary device of Example 5a or 5a1, wherein generating a signal representing a detection of the SWI module when a difference between two voltages detected during the sampling phase is within a predetermined range comprises the processor receiving first data representing a first detected voltage and receiving second data representing a second detected voltage; determining a difference between the first detected voltage and the second detected voltage; and determining that this difference is within the predetermined range.

In Example 5a4, the primary device of Example 5a3, wherein, in a hypothetical example provided for illustrative purposes only, the first detected voltage is 1.72V and the second detected voltage is 1.70V, and the predetermined range is a difference of 50mV to 90mV.

In Example 7a, the primary device of any one of Examples 1a to 6a, wherein the detected one or more voltages at the SWI is a plurality of detected voltages, and wherein the processor (608) determining whether the SWI module is present in the secondary device comprises the processor being configured to generate a signal representing a detection of the SWI module (122) when a sum of the plurality of detected voltages is less than or less than a predetermined tolerance of the supply voltage times a quantity of the plurality of voltage measurements, and to generate a signal representing an absence of the SWI module (122) when a sum of the plurality of detected voltages is equal to or within a predetermined tolerance of the supply voltage times a quantity of the plurality of voltage measurements.

In Example 8a, the primary device of any one of Examples 1a to 7a, wherein the voltage detection circuit (606) comprises an analog digital converter; and wherein the analog digital converter is configured with a resolution to detect a plurality of steps between the supply voltage and the steady-state voltage.

In Example 9a, the primary device of any one of Examples 1a to 8a, wherein the processor (608) is further configured to send a signal representing a malfunction of the SWI module when a voltage measurement of the plurality of voltage measurements represents an overcurrent, wherein the overcurrent is a current across the SWI exceeding a predetermined maximum current threshold.

In Example 10a, the primary device of any one of Examples 1a to 9a, wherein a circuit to provide the supply voltage and/or the ADC is located in the secondary device.

In Example 11a, the primary device of any one of Examples 1a to 10a, wherein the processor (608) is further configured to send a signal representing a malfunction of an energy storage device of the secondary device if a difference between a first voltage measurement during the sampling phase a second voltage measurement during the sampling phase is or approximates the 0 V, or if a sum of voltage measurements taken during the sampling phase is or approximates the steady state voltage times the number of samples taken.

In Example 12a, the primary device of any one of Examples 1a to 11a, wherein the secondary device comprises a battery, and wherein the SWI module is a battery authentication module.

In Example 13a, the primary device of any one of Examples 1a to 12a, wherein the primary device is configured to perform a plurality of module determinations, wherein each of the plurality of module determinations comprises the processor being configured to: selectively connect the SWI (602) to the supply voltage during a charging phase and to a voltage detection circuit (606) during a subsequent sampling phase, during which the voltage detection circuit (606) detects one or more voltages at the SWI (602); and determine whether an SWI module is present in the secondary device based on the detected one or more voltages.

In Example 14a, a method of module detection, comprising: selectively connecting a single wire interface, SWI, (602) to a supply voltage during a charging phase and to a voltage detection circuit (606) during a subsequent sampling phase, during which the voltage detection circuit (606) detects one or more voltages at the SWI (602); and determining whether an SWI module is present in the secondary device based on the detected one or more voltages.

In Example 15a, the method of Example 14a, wherein determining whether the SWI module is present in the secondary device comprises generating a signal representing a detection of the SWI module (122) when a difference between two voltages detected during the sampling phase is outside of a range, and generating a signal representing an absence of the SWI module (122) when a difference between two voltages detected during the sampling phase is within the range.

In Example 16a, the method of any one of Examples 14a to 15a, wherein determining whether the SWI module is present in the secondary device comprises generating a signal representing a detection of the SWI module (122) when a voltage detected during the sampling phase is less than a predetermined threshold, and generating a signal representing an absence of the SWI module (122) when the voltage detected during the sampling phase is greater than the predetermined threshold.

In Example 17a, the method of any one of Examples 14a to 16a, wherein the detected one or more voltages at the SWI is a plurality of detected voltages, and wherein determining whether the SWI module is present in the secondary device comprises generating a signal representing a detection of the SWI module (122) when a sum of the plurality of detected voltages is less than or less than a predetermined tolerance of the supply voltage times a quantity of the plurality of voltage measurements, and generating a signal representing an absence of the SWI module (122) when a sum of the plurality of detected voltages is equal to or within a predetermined tolerance of the supply voltage times a quantity of the plurality of voltage measurements.

In Example 18a, the method of any one of Examples 14a to 17a, further comprising sending a signal representing a malfunction of the SWI module when a voltage measurement of the plurality of voltage measurements represents an overcurrent, wherein the overcurrent is a current across the SWI exceeding a predetermined maximum current threshold.

In Example 19a, the method of any one of Examples 14a to 18a, wherein a circuit to provide the supply voltage and/or the ADC is located in the secondary device.

In Example 20a, the method of any one of Examples 14a to 19a, further comprising sending a signal representing a malfunction of an energy storage device of the secondary device if a difference between a first voltage measurement during the sampling phase a second voltage measurement during the sampling phase is or approximates the 0 V, or if a sum of voltage measurements taken during the sampling phase is or approximates the steady state voltage times the number of samples taken.

In Example 21a, the method of any one of Examples 14a to 20a, further comprising the primary device performing a plurality of module determinations, wherein each of the plurality of module determinations comprises: selectively connecting the SWI (602) to the supply voltage during a charging phase and to a voltage detection circuit (606) during a subsequent sampling phase, during which the voltage detection circuit (606) detects one or more voltages at the SWI (602); and determining whether an SWI module is present in the secondary device based on the detected one or more voltages.

In Example 22a, a non-transitory computer readable medium, comprising instructions which, if executed, cause a processor to perform the method of Examples 14a to 21a.

In Example 1c, a device for detecting a single-wire interface, SWI, module, including: a processor (608), configured to: selectively connect a SWI (602) to a supply voltage during a charging phase and to a voltage detection circuit (606) during a subsequent sampling phase; receive an output of a voltage detection circuit (606), representing one or more detected voltages at the SWI (602) during the sampling phase; and determine whether an SWI module is present in the secondary device based on the detected one or more voltages.

In Example 2c, the primary device of Example 1c, wherein the processor (608) determining whether the SWI module is present in the secondary device includes the processor being configured to generate a signal representing a detection of the SWI module (122) when a difference between two voltages detected during the sampling phase is outside of a range, and the processor (608) being configured to generate a signal representing an absence of the SWI module (122) when a difference between two voltages detected during the sampling phase is within the range.

In Example 3c, the primary device of Example 1c, wherein the processor (608) determining whether the SWI module is present in the secondary device includes the processor being configured to generate a signal representing a detection of the SWI module (122) when a voltage detected during the sampling phase is less than a predetermined threshold, and being configured to generate a signal representing an absence of the SWI module (122) when the voltage detected during the sampling phase is greater than the predetermined threshold.

In Example 4c, the primary device of any one of Examples 1c to 3c, wherein the detected one or more voltages at the SWI is a plurality of detected voltages, and wherein the processor (608) determining whether the SWI module is present in the secondary device includes the processor being configured to generate a signal representing a detection of the SWI module (122) when a sum of the plurality of detected voltages is less than a predetermined tolerance of the supply voltage times a quantity of the plurality of voltage measurements, and to generate a signal representing an absence of the SWI module (122) when a sum of the plurality of detected voltages is equal to or within a predetermined tolerance of the supply voltage times a quantity of the plurality of voltage measurements.

In Example 5c, the primary device of any one of Examples 1c to 4c, wherein the voltage detection circuit (606) includes an analog digital converter; and wherein the analog digital converter is configured with a resolution to detect a plurality of steps between the supply voltage and the steady-state voltage.

In Example 6c, the primary device of any one of Examples 1c to 5c, wherein the processor (608) is further configured to send a signal representing a malfunction of the SWI module when a voltage measurement of the plurality of voltage measurements represents an overcurrent, wherein the overcurrent is a current across the SWI exceeding a predetermined maximum current threshold.

In Example 7c, the primary device of any one of Examples 1c to 6c, wherein the processor (608) is further configured to send a signal representing a malfunction of an energy storage device of the secondary device if a difference between a first voltage measurement during the sampling phase a second voltage measurement during the sampling phase is or approximates the 0 V, or if a sum of voltage measurements taken during the sampling phase is or approximates the steady state voltage times the number of samples taken.

In Example 8c, the primary device of any one of Examples 1c to 7c, wherein the primary device is configured to perform a plurality of module determinations, wherein each of the plurality of module determinations includes the processor being configured to: selectively connect the SWI (602) to the supply voltage during a charging phase and to a voltage detection circuit (606) during a subsequent sampling phase, during which the voltage detection circuit (606) detects one or more voltages at the SWI (602); and determine whether an SWI module is present in the secondary device based on the detected one or more voltages.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A primary device comprising:
a single-wire interface, SWI, (602) for a single-wire connection to a secondary device;
a voltage detection circuit (606); and
a processor (608), configured to:
selectively connect the SWI (602) to a supply voltage during a charging phase and to the voltage detection circuit (606) during a subsequent sampling phase, wherein the voltage detection circuit (606) is configured to execute a plurality of voltage measurements to detect a plurality of voltages at the SWI (602) during the sampling phase; and
determine whether an SWI module is present and additional information in the secondary device based on the detected plurality of voltages.

2. The primary device of claim 1, further comprising a voltage supply circuit (607), configured to supply the supply voltage.

3. The primary device of claim 2, further comprising a microcontroller, wherein the processor (608), the voltage supply circuit (607), and the voltage detection circuit (606) are configured as part of the microcontroller.

4. The primary device of claim 3, wherein the voltage supply circuit (607) is a General Purpose Input Output port of the microcontroller.

5. The primary device of any one of claims 1 to 4, wherein the processor (608) determining whether the SWI module is present in the secondary device comprises the processor being configured to generate a signal representing a detection of the SWI module (122) when a difference between two voltages of the plurality of voltages detected during the sampling phase is outside of a range, and the processor (608) being configured to generate a signal representing an absence of the SWI module (122) when a difference between two voltages detected during the sampling phase is within the range.

6. The primary device of any one of claims 1 to 4, wherein the processor (608) determining whether the SWI module is present in the secondary device comprises the processor being configured to generate a signal representing a detection of the SWI module (122) when a sum of the plurality of detected voltages is less than a predetermined tolerance of the supply voltage times a quantity of the plurality of voltage measurements, and to generate a signal representing an absence of the SWI module (122) when a sum of the plurality of detected voltages is equal to or within a predetermined tolerance of the supply voltage times a quantity of the plurality of voltage measurements.

7. The primary device of any one of claims 1 to 6, wherein the voltage detection circuit (606) comprises an analog digital converter; and wherein the analog digital converter, ADC, is configured with a resolution to detect a plurality of steps between the supply voltage and a steady-state voltage.

8. The primary device of any one of claims 1 to 7, wherein the processor (608) is further configured to send a signal representing a malfunction of the SWI module when a voltage measurement of the plurality of voltage measurements represents an overcurrent, wherein the overcurrent is a current across the SWI exceeding a predetermined maximum current threshold.

9. The primary device of claim 7, wherein a circuit to provide the supply voltage and/or the ADC is located in the primary device.

10. The primary device of any one of claims 1 to 6 or 8 to 9; wherein the processor (608) is further configured to send a signal representing a malfunction of an energy storage device of the secondary device if a difference between a first voltage measurement of the plurality of voltage measurements during the sampling phase a second voltage measurement of the plurality of voltage measurements during the sampling phase is or approximates the 0 V, or if a sum of the plurality of voltage measurements taken during the sampling phase is or approximates a steady state voltage times the number of samples taken.

11. The primary device of any one of claims 1 to 10, wherein the secondary device comprises a battery, and wherein the SWI module is a battery authentication module.

12. The primary device of any one of claims 1 to 11, wherein the primary device is configured to perform a plurality of module determinations, wherein each of the plurality of module determinations comprises the processor being configured to:
selectively connect the SWI (602) to the supply voltage during a charging phase and to a voltage detection circuit (606) during a subsequent sampling phase, during which the voltage detection circuit (606) is configured to execute a plurality of voltage measurements to detect a plurality of voltages at the SWI (602); and
determine whether an SWI module is present in the secondary device based on the detected plurality of voltages.

13. A method of module detection, comprising:
selectively connecting a single wire interface, SWI, (602) to a supply voltage during a charging phase and to a voltage detection circuit (606) during a subsequent sampling phase, during which the voltage detection circuit (606) executes a plurality of voltage measurements to detect a plurality of voltages at the SWI (602); and
determining whether an SWI module is present and additional information in the secondary device based on the detected plurality of voltages.

14. A non-transitory computer readable medium, comprising instructions which, if executed, cause a processor to perform the method of claim 13.

## Patentansprüche

1. Primärvorrichtung, die Folgendes umfasst:
eine Einzeldrahtschnittstelle (SWI) (602) für eine Einzeldrahtverbindung mit einer Sekundärvorrichtung;
eine Spannungsdetektionsschaltung (606); und
einen Prozessor (608), der für Folgendes ausgelegt ist:
selektives Verbinden der SWI (602) mit einer Versorgungsspannung während einer Ladephase und mit der Spannungsdetektionsschaltung (606) während einer nachfolgenden Abtastphase, wobei die Spannungsdetektionsschaltung (606) dazu ausgelegt ist, eine Vielzahl von Spannungsmessungen auszuführen, um eine Vielzahl von Spannungen an der SWI (602) während der Abtastphase zu detektieren; und
Bestimmen, ob ein SWI-Modul vorhanden ist, und zusätzliche Informationen in der Sekundärvorrichtung basierend auf der detektierten Vielzahl von Spannungen.

2. Primärvorrichtung nach Anspruch 1, die ferner eine Spannungsversorgungsschaltung (607) umfasst, die dazu ausgelegt ist, die Versorgungsspannung zu liefern.

3. Primärvorrichtung nach Anspruch 2, die ferner einen Mikrocontroller umfasst, wobei der Prozessor (608), die Spannungsversorgungsschaltung (607) und die Spannungsdetektionsschaltung (606) als Teil des Mikrocontrollers ausgelegt sind.

4. Primärvorrichtung nach Anspruch 3, wobei die Spannungsversorgungsschaltung (607) ein Allzweck-Ein-/Ausgangsanschluss des Mikrocontrollers ist.

5. Primärvorrichtung nach einem der Ansprüche 1 bis 4, wobei der Prozessor (608), der bestimmt, ob das SWI-Modul in der Sekundärvorrichtung vorhanden ist, umfasst, dass der Prozessor dazu ausgelegt ist, ein Signal zu erzeugen, das eine Detektion des SWI-Moduls (122) repräsentiert, wenn eine Differenz zwischen zwei Spannungen der Vielzahl von Spannungen, die während der Abtastphase detektiert werden, außerhalb eines Bereichs liegt, und wobei der Prozessor (608) dazu ausgelegt ist, ein Signal zu erzeugen, das eine Abwesenheit des SWI-Moduls (122) repräsentiert, wenn eine Differenz zwischen zwei Spannungen, die während der Abtastphase detektiert werden, innerhalb des Bereichs liegt.

6. Primärvorrichtung nach einem der Ansprüche 1 bis 4, wobei der Prozessor (608), der bestimmt, ob das SWI-Modul in der Sekundärvorrichtung vorhanden ist, umfasst, dass der Prozessor dazu ausgelegt ist, ein Signal zu erzeugen, das eine Detektion des SWI-Moduls (122) repräsentiert, wenn eine Summe der Vielzahl von detektierten Spannungen kleiner als eine vorbestimmte Toleranz der Versorgungsspannung mal eine Menge der Vielzahl von Spannungsmessungen ist, und zum Erzeugen eines Signals, das eine Abwesenheit des SWI-Moduls (122) repräsentiert, wenn eine Summe der Vielzahl von detektierten Spannungen gleich oder innerhalb einer vorbestimmten Toleranz der Versorgungsspannung mal einer Menge der Vielzahl von Spannungsmessungen ist.

7. Primärvorrichtung nach einem der Ansprüche 1 bis 6, wobei die Spannungsdetektionsschaltung (606) einen Analog-Digital-Wandler umfasst; und wobei der Analog-Digital-Wandler (ADC) mit einer Auflösung konfiguriert ist, um eine Vielzahl von Schritten zwischen der Versorgungsspannung und einer stationären Spannung zu detektieren.

8. Primärvorrichtung nach einem der Ansprüche 1 bis 7, wobei der Prozessor (608) ferner dazu ausgelegt ist, ein Signal zu senden, das eine Fehlfunktion des SWI-Moduls repräsentiert, wenn eine Spannungsmessung der Vielzahl von Spannungsmessungen einen Überstrom repräsentiert, wobei der Überstrom ein Strom über die SWI ist, der eine vorbestimmte maximale Stromschwelle überschreitet.

9. Primärvorrichtung nach Anspruch 7, wobei sich eine Schaltung zum Bereitstellen der Versorgungsspannung und/oder des ADC in der Primärvorrichtung befindet.

10. Primärvorrichtung nach einem der Ansprüche 1 bis 6 oder 8 bis 9;
wobei der Prozessor (608) ferner so ausgelegt ist, dass er ein Signal sendet, das eine Fehlfunktion einer Energiespeichervorrichtung der Sekundärvorrichtung darstellt, wenn sich eine Differenz zwischen einer ersten Spannungsmessung der Vielzahl von Spannungsmessungen während der Abtastphase und einer zweiten Spannungsmessung der Vielzahl von Spannungsmessungen während der Abtastphase von 0 V unterscheidet oder sich dieser annähert, oder wenn eine Summe der Vielzahl von Spannungsmessungen, die während der Abtastphase genommen wurden, einer stationären Spannung mal der Anzahl der genommenen Proben entspricht oder sich dieser annähert.

11. Primärvorrichtung nach einem der Ansprüche 1 bis 10, wobei die Sekundärvorrichtung eine Batterie umfasst, und wobei das SWI-Modul ein Batterieauthentifizierungsmodul ist.

12. Primärvorrichtung nach einem der Ansprüche 1 bis 11, wobei die Primärvorrichtung dazu ausgelegt ist, eine Vielzahl von Modulbestimmungen durchzuführen, wobei jede der Vielzahl von Modulbestimmungen umfasst, dass der Prozessor für Folgendes ausgelegt ist:
selektives Verbinden der SWI (602) mit der Versorgungsspannung während einer Ladephase und mit einer Spannungsdetektionsschaltung (606) während einer nachfolgenden Abtastphase, während der die Spannungsdetektionsschaltung (606) dazu ausgelegt ist, eine Vielzahl von Spannungsmessungen auszuführen, um eine Vielzahl von Spannungen an der SWI (602) zu detektieren; und
Bestimmen, ob ein SWI-Modul in der Sekundärvorrichtung vorhanden ist, basierend auf der detektierten Vielzahl von Spannungen.

13. Verfahren zur Moduldetektion, das Folgendes umfasst:
selektives Verbinden einer Einzeldrahtschnittstelle (SWI) (602) mit einer Versorgungsspannung während einer Ladephase und mit einer Spannungsdetektionsschaltung (606) während einer nachfolgenden Abtastphase, während der die Spannungsdetektionsschaltung (606) eine Vielzahl von Spannungsmessungen ausführt, um eine Vielzahl von Spannungen an der SWI (602) zu detektieren; und
Bestimmen, ob ein SWI-Modul vorhanden ist, und zusätzliche Informationen in der sekundären Vorrichtung basierend auf der detektierten Vielzahl von Spannungen.

14. Nichtflüchtiges computerlesbares Medium, das Anweisungen umfasst, die, wenn sie ausgeführt werden, einen Prozessor veranlassen, das Verfahren nach Anspruch 13 durchzuführen.

## Revendications

1. Dispositif primaire comprenant :
une interface unifilaire, SWI (602) pour une connexion unifilaire vers un appareil secondaire ;
un circuit de détection de tension (606) ; et
un processeur (608), configuré pour :
connecter sélectivement la SWI (602) à une tension d'alimentation pendant une phase de charge et au circuit de détection de tension (606) pendant une phase d'échantillonnage ultérieure, le circuit de détection de tension (606) étant configuré pour exécuter une pluralité de mesures de tension pour détecter une pluralité de tensions au niveau de la SWI (602) pendant la phase d'échantillonnage ; et
déterminer si un module SWI est présent et des informations supplémentaires dans le dispositif secondaire sur la base de la pluralité de tensions détectées.

2. Dispositif primaire selon la revendication 1, comprenant en outre un circuit d'alimentation en tension (607), configuré pour fournir la tension d'alimentation.

3. Dispositif primaire selon la revendication 2, comprenant en outre un microcontrôleur, le processeur (608), le circuit d'alimentation en tension (607) et le circuit de détection de tension (606) étant configurés en tant que partie du microcontrôleur.

4. Dispositif primaire selon la revendication 3, le circuit d'alimentation en tension (607) étant un port d'entrée/sortie à usage général du microcontrôleur.

5. Dispositif primaire selon l'une quelconque des revendications 1 à 4, le processeur (608) déterminant si le module SWI est présent dans le dispositif secondaire comprenant le processeur configuré pour générer un signal représentant une détection du module (122) SWI lorsqu'une différence entre deux tensions de la pluralité de tensions détectées pendant la phase d'échantillonnage est en dehors d'une plage, et le processeur (608) étant configuré pour générer un signal représentant une absence du module (122) SWI lorsqu'une différence entre deux tensions détectées pendant la phase d'échantillonnage est dans la plage.

6. Dispositif primaire selon l'une quelconque des revendications 1 à 4, le processeur (608) déterminant si le module SWI est présent dans le dispositif secondaire comprenant le processeur configuré pour générer un signal représentant une détection du module (122) SWI lorsqu'une somme de la pluralité de tensions détectées est inférieure à une tolérance prédéterminée de la tension d'alimentation multipliée par une quantité de la pluralité de mesures de tension, et générer un signal représentant une absence du module (122) SWI lorsqu'une somme de la pluralité de tensions détectées est égale à ou comprise dans une tolérance prédéterminée de la tension d'alimentation multipliée par une quantité de la pluralité de mesures de tension.

7. Dispositif primaire selon l'une quelconque des revendications 1 à 6, le circuit de détection de tension (606) comprenant un convertisseur analogique numérique ; et le convertisseur analogique numérique, CAN, étant configuré avec une résolution pour détecter une pluralité de pas entre la tension d'alimentation et une tension en régime permanent.

8. Dispositif primaire selon l'une quelconque des revendications 1 à 7, le processeur (608) étant en outre configuré pour envoyer un signal représentant un dysfonctionnement du module SWI lorsqu'une mesure de tension de la pluralité de mesures de tension représente une surintensité, la surintensité étant un courant à travers la SWI dépassant un seuil de courant maximal prédéterminé.

9. Dispositif primaire selon la revendication 7, un circuit pour fournir la tension d'alimentation et/ou le CAN étant situé dans le dispositif primaire.

10. Dispositif primaire selon l'une quelconque des revendications 1 à 6 ou 8 et 9 ;
le processeur (608) étant en outre configuré pour envoyer un signal représentant un dysfonctionnement d'un dispositif de stockage d'énergie du dispositif secondaire si une différence entre une première mesure de tension de la pluralité de mesures de tension pendant la phase d'échantillonnage et une deuxième mesure de tension de la pluralité de mesures de tension pendant la phase d'échantillonnage est ou s'approche du 0 V, ou si une somme de la pluralité de mesures de tension prises pendant la phase d'échantillonnage est ou s'approche d'une tension en régime permanent multipliée par le nombre d'échantillons pris.

11. Dispositif primaire selon l'une quelconque des revendications 1 à 10, le dispositif secondaire comprenant une batterie, et le module SWI étant un module d'authentification de batterie.

12. Dispositif primaire selon l'une quelconque des revendications 1 à 11, le dispositif primaire étant configuré pour effectuer une pluralité de déterminations de modules, chacune de la pluralité de déterminations de modules comprenant le processeur configuré pour :
connecter sélectivement la SWI (602) à la tension d'alimentation pendant une phase de charge et à un circuit de détection de tension (606) pendant une phase d'échantillonnage ultérieure, pendant lesquelles le circuit de détection de tension (606) est configuré pour exécuter une pluralité de mesures de tension pour détecter une pluralité de tensions au niveau de la SWI (602) ; et
déterminer si un module SWI est présent ou non dans le dispositif secondaire sur la base de la pluralité de tensions détectée.

13. Procédé de détection de module, comprenant :
la connexion sélective d'une interface unifilaire, SWI (602) à une tension d'alimentation pendant une phase de charge et à un circuit de détection de tension (606) pendant une phase d'échantillonnage ultérieure, pendant lesquelles le circuit de détection de tension (606) exécute une pluralité de mesures de tension pour détecter une pluralité de tensions au niveau de la SWI (602) ; et la détermination si un module SWI est présent ou non et d'informations supplémentaires dans le dispositif secondaire sur la base de la pluralité de tensions détectée.

14. Support non transitoire lisible par ordinateur, comprenant des instructions qui, si elles sont exécutées, amènent un processeur à exécuter le procédé selon la revendication 13.
